# EUROPEAN PATENT SPECIFICATION

(11) **EP 2 125 271 B1**
(45) Date of publication and mention of the grant of the patent: **04.04.2012**
(21) Application number: 07824438.1
(22) Date of filing: 02.11.2007
(51) Int. Cl.: B22F 9/24, C09K 19/00

(54) **CHEMICAL PREPARATION OF METALS**
CHEMISCHE HERSTELLUNG VON METALLEN
PRÉPARATION CHIMIQUE DE MÉTAUX

(30) Priority: 06.11.2006 GB 0622096
(43) Date of publication of application: 02.12.2009
(73) Proprietor: Nanotecture Ltd., Chilworth Science Park Southampton SO16 7NS (GB)
(72) Inventor: AMOS, Katherine, Eastleigh, Hampshire SO50 5GR (GB)
(74) Representative: Smyth, Gyles Darren
(86) International application number: PCT/GB2007/004199
(87) International publication number: WO 2008/056113

(56) References cited:
- EP-A- 1 375 035
- EP-A- 1 550 632
- US-A- 3 788 955
- US-A- 4 076 861
- US-A1- 2004 231 462
- US-A1- 2006 213 328
- US-B1- 6 183 545
- US-B1- 6 503 382
- CARPENTER E E ET AL: "Magnetic properties of iron and iron platinum alloys synthesized via microemulsion techniques" JOURNAL OF APPLIED PHYSICS, AMERICAN INSTITUTE OF PHYSICS. NEW YORK, US, vol. 87, no. 9, 1 May 2000 (2000-05-01), pages 5615-5617, XP012050256 ISSN: 0021-8979
- YAMAUCHI YUSUKE ET AL: "Unique microstructure of mesoporous Pt (Hi-Pt) prepared via direct physical casting in lyotropic liquid crystalline media" CHEM. MATER.; CHEMISTRY OF MATERIALS DEC 13 2005, vol. 17, no. 25, 13 December 2005 (2005-12-13), pages 6342-6348, XP002477520

## Description

The present invention relates to the low temperature chemical preparation of metals which are normally difficult to prepare by reduction, for example the preparation of tin by the reduction of a tin (II) or tin (IV) salt.

Tin is a metal that is proving very useful as an electrode in electrochemical cells. We have previously found that the use of liquid crystal templating of various metals, including tin, produces electrodes which give the electrochemical cells much enhanced properties. The deposition of tin by chemical methods is usually carried out at relatively high temperatures (~75 °C). However, high temperatures can cause phase instability in liquid crystal templating, leading to a poorly structured material.

At present, chemical deposition of tin at low temperatures may be performed using tin (II) or tin (IV) salts. However, these are either only sparingly soluble in water and so reaction yields are very small, or they are difficult to reduce to the metal and require strong reducing agents that are incompatible with many surfactants used in the formation of liquid crystals. These shortcomings may be, to a certain extent, relieved if reactions are carried out at high temperature, however, high temperatures are also incompatible with many surfactants in the formation of liquid crystals.

We have now surprisingly found that the co-deposition of a readily reduced metal (e.g. copper) allows a less readily reduced metal (e.g. tin) to be deposited more readily, even at low temperatures, such as ambient temperature.

Thus, the present invention consists in the process of claim 1.

This invention allows deposition of metallic tin, for example, from tin (II) or tin (IV) solutions at lower temperatures than are conventionally used, even at ambient temperature. The use of tin (IV) salts allows higher concentrations of tin ions to be used in order to generate practical yields. Suitable tin salts include tin (II) tetrafluoroborate, potassium stannate, tin (II) acetate, tin (IV) chloride, tin (II) bromide, tin (II) chloride and tin (II) methanesulphonate. Examples of other less readily reduced metal salts (i.e. salts of the first metal) include nickel (II) chloride, nickel (II) sulphate, nickel (II) acetate, cobalt (II) chloride, cobalt (II) acetate, cobalt (II) sulphate, iron (II) chloride, iron (II) sulphate, iron (II) tetrafluoroborate and iron (II) sulphamate.

The compound of the more readily reduced metal (the second metal) is also preferably a salt and preferably the anion of the salt is the same as the anion of the salt of the less readily reduced metal. Suitable metals include copper, platinum, palladium, silver, gold, nickel and cobalt. Preferred compounds of these metals include tetraminecopper (II) sulphate, copper (II) tetrafluoroborate, hexachloroplatinic acid, ammonium tetrachloropalladate and gold (III) chloride. The ease of reduction is relative, and so, for example, whilst the reduction of a tin salt could be enhanced by the presence of a nickel compound, the reduction of a nickel salt could be enhanced by the presence of a platinum compound.

The actual temperature employed is not especially critical, but it is an important advantage that the present invention allows the reaction to be carried out at a temperature within the stability range of the most commonly used surfactants for use in the production of liquid crystal systems. Thus, the reaction is preferably carried out at a temperature of from 2°C to 55°C, more preferably from 10°C to 50°C, still more preferably from 20°C to 50°C, and most preferably at ambient temperature.

The reaction normally and preferably takes place in the presence of a solvent, the nature of which is not critical, provided that it can dissolve the reagents, at least to some extent, and that it does not interfere with the reaction or does not interfere to an unacceptable extent. A suitable solvent is water, but other solvents may be used in appropriate circumstances.

Any reducing agent commonly used in this type of reduction may equally be employed here. Examples include: sodium hypophosphite, sodium borohydride, dimethylamine borane, hydrazine, sodium citrate and zinc metal.

Although the invention has a wider applicability, it arose out of research in relation to liquid crystal systems, and is of particular value in such systems. The preparation and use of liquid crystalline phases is disclosed in US Patents No 6,503,382 and 6,203,925.

Liquid crystal systems are based upon certain organic structure directing agents, preferably surfactants. The organic structure-directing agent is included in the reaction mixture in order to impart a homogeneous lyotropic liquid crystalline phase to the mixture. The liquid crystalline phase is thought to function as a structure-directing medium or template for deposition of a mesoporous layer. By controlling the nanostructure of the lyotropic liquid crystalline phase, mesoporous material may be synthesised having a corresponding nanostructure. For example, porous materials formed from normal topology hexagonal phases will have a system of pores disposed on a hexagonal lattice, whereas porous materials formed from normal topology cubic phases will have a system of pores disposed in cubic topology. Similarly, porous materials having a lamellar nanostructure may be deposited from lamellar phases. Accordingly, by exploiting the rich lyotropic polymorphism exhibited by liquid crystalline phases, liquid crystal technology allows precise control over the structure of the porous materials and enables the synthesis of well-defined porous materials having a long range spatially and orientationally periodic distribution of uniformly sized pores.

Any suitable amphiphilic organic compound or compounds capable of forming a homogeneous lyotropic liquid crystalline phase may be used as structure-directing agent, either low molar mass or polymeric. These may include compounds sometimes referred to as organic directing agents. In order to provide the necessary homogeneous liquid crystalline phase, the amphiphilic compound will generally be used at an high concentration, typically at least about 10% by weight, preferably at least 20% by weight, and more preferably at least 30% by weight, based on the total weight of the solvent, source material and amphiphilic compound.

Preferably, the organic structure-directing agent comprises an organic surfactant compound of the formula RQ wherein R represents a.linear or branched alkyl, aryl, aralkyl or alkylaryl group having from 6 to about 60 carbon atoms, preferably from 12 to 18 carbon atoms, and Q represents a group selected from: [O(CH₂)ₘ]ₙOH wherein m is an integer from 1 to about 4 and preferably m is 2, and n is an integer from 2 to about 60, preferably from 4 to 12; nitrogen bonded to at least one group selected from alkyl having at least 4 carbon atoms, aryl, aralkyl and alkylaryl; and phosphorus or sulphur bonded to at least 2 oxygen atoms. Other suitable structure-directing agents include monoglycerides, phospholipids and glycolipids.

Other suitable compounds include surface-active organic compounds of the formula R₁R_{2Q} wherein R₁ and R₂ represent aryl or alkyl groups having from 6 to about 36 carbon atoms or combinations thereof, and Q represents a group selected from: - (OC₂H₄) ₙOH, wherein n is an integer from about 2 to about 20; nitrogen bonded to at least two groups selected from alkyl having at least 4 carbon atoms, and aryl; and phosphorus or sulphur bonded to at least 4 oxygen atoms.

Preferably non-ionic surfactants such as octaethylene glycol monododecyl ether (C₁₂EO₈, wherein EO represents ethylene oxide) and octaethylene glycol monohexadecyl ether (C₁₆EO₈) or commercial products containing mixtures of related molecules are used as organic structure-directing agents. Other preferred organic directing agents include polyoxyalkylene derivatives of propylene glycol, such as those sold under the trade mark "Pluronic", and ionic surfactants such as CTAB.

The invention is further illustrated by the following non-limiting Examples.

### EXAMPLE 1

### Low pH synthesis with 50 % copper(II) salt as co-depositant

72 g of BC10-TX surfactant was heated until molten. To this was added a mixture containing 12.0 cm³ of 1.0 M tin(II) tetrafluoroborate solution (aqueous), 12.0 cm ³ of 1.0 M copper(II) tetrafluoroborate solution (aqueous) and 2.11 g of sodium hypophosphite in 24 cm³ of deionised water. The resulting paste was stirred vigorously until homogeneous, allowed to cool to room temperature and then allowed to stand at room temperature overnight. The surfactant was removed from the resultant product via repeated washing in deionised water. The collected powder was dried overnight under vacuum. Compositional analysis of the deposited material using an energy dispersive x-ray technique (EDAX) revealed that 50 atomic % of the metal content was copper and the remaining 50 atomic % was tin.

### EXAMPLE 2

### Low pH synthesis with 1% copper(II) salt as co-depositant

72 g of BC10-TX surfactant was heated until molten. To this was added a mixture containing 11.88 cm³ of 1.0 M tin(II) tetrafluoroborate solution (aqueous), 0.12 cm ³ of 1.0 M copper(II) tetrafluoroborate solution (aqueous) and 2.11 g of sodium hypophosphite in 24 cm³ of deionised water. The resulting paste was stirred vigorously until homogeneous, allowed to cool to room temperature and then allowed to stand at room temperature overnight. The surfactant was removed from the resultant product via repeated washing in deionised water. The collected powder was dried overnight under vacuum. Compositional analysis of the deposited material using an energy dispersive x-ray technique (EDAX) revealed that 1.5 atomic % of the metal content was copper and the remaining 98.5 atomic % was tin.

### EXAMPLE 3 (Comparative)

### Low pH synthesis with no copper(II) salt

72 g of BC10-TX surfactant was heated until molten. To this was added a solution of 12.0 cm³ of 1.0 M tin(II) tetrafluoroborate solution (aqueous) and 2.11 g of sodium hypophosphite in 24 cm³ of deionised water. The resulting paste was stirred vigorously until homogeneous, allowed to cool to room temperature and then allowed to stand at room temperature overnight. The resultant mixture contained no solid product and washing in deionised water revealed no solid product.

### EXAMPLE 4

### High pH synthesis with 50 % copper(II) salt as co-depositant

60 g of BC10-TX surfactant was heated until molten. To this was added a mixture containing 2.0 cm³ of 0.5 M potassium stannate solution (aqueous), 2.0 cm³ of 0.5 M tetraminecopper (II) sulphate solution (aqueous), 16 cm³ of deionised water and 0.30 g of sodium borohydride in 20 cm³ of concentrated ammonia solution (35%; S.G 0.88). The resulting paste was stirred vigorously until homogeneous, allowed to cool to room temperature and then allowed to stand at room temperature overnight. The surfactant was removed from the resultant product via repeated washing in deionised water. The collected powder was dried overnight under vacuum. Compositional analysis of the deposited material using an energy dispersive x-ray technique (EDAX) revealed that 50 atomic % of the metal content was copper and the remaining 50 atomic % was tin.

## Claims

1. A process for the preparation of a first metal from a salt thereof by reduction in the presence of a reducing agent, **characterised in that** the reduction is effected in a phase of a liquid crystal system in the presence of a compound of a second metal, wherein the compound of the second metal is more readily reduced by the reducing agent than is the salt of the first metal, wherein the first metal is tin, cobalt or iron.

2. A process according to Claim 1, in which the salt of the first metal is tin (II) tetrafluoroborate, potassium stannate, tin (II) acetate, tin (IV) chloride, tin (II) bromide, tin (II) chloride, tin (II) methanesulphonate, cobalt (II) chloride, cobalt (II) acetate, cobalt (II) sulphate, iron (II) chloride, iron (II) sulphate, iron (II) tetrafluoroborate or iron (II) sulphamate.

3. A process according to Claim 1 or Claim 2, in which the first metal is tin.

4. A process according to any one of the preceding Claims, in which the second metal is copper, platinum, palladium, silver, gold, nickel or cobalt.

5. A process according to Claim 4, in which the compound of the second metal is tetraminecopper (II) sulphate, copper (II) tetrafluoroborate hexachloroplatinic acid, ammonium tetrachloropalladate or gold (III) chloride.

6. A process according to any one of the preceding Claims, effected at a temperature of from 2°C to 55°C.

7. A process according to Claim 6, in which the temperature is from 20°C to 50°C.

8. A process according to Claim 7, in which the temperature is ambient temperature.

## Patentansprüche

1. Verfahren zur Herstellung eines ersten Metalls aus einem Salz davon durch Reduktion in Anwesenheit eines Reduktionsmittels, **dadurch gekennzeichnet, dass** die Reduktion in einer Phase eines Flüssigkristallsystems in Anwesenheit einer Verbindung eines zweiten Metalls ausgeführt wird, wobei die Verbindung des zweiten Metalls durch das Reduktionsmittel leichter reduziert wird als das Salz des ersten Metalls, wobei das erste Metall Zinn, Cobalt oder Eisen ist.

2. Verfahren nach Anspruch 1, wobei das Salz des ersten Metalls Zinn(II)-tetrafluorborat, Kaliumstannat, Zinn(II)-acetat, Zinn(IV)-chlorid, Zinn(II)-bromid, Zinn(II)-chlorid, Zinn(II)-methansulfonat, Cobalt(II)-chlorid, Cobalt(II)-acetat, Cobalt(II)-sulfat, Eisen(II)-chlorid, Eisen(II)-sulfat, Eisen(II)-tetrafluorborat oder Eisen(II)-sulfamat ist.

3. Verfahren nach Anspruch 1 oder Anspruch 2, wobei das erste Metall Zinn ist.

4. Verfahren nach einem der vorstehenden Ansprüche, wobei das zweite Metall Kupfer, Platin, Palladium, Silber, Gold, Nickel oder Cobalt ist.

5. Verfahren nach Anspruch 4, wobei die Verbindung des zweiten Metalls Tetraminkupfer(II)-sulfat, Kupfer(II)tetrafluorborat, Hexachlorplatinsäure, Ammoniumtetrachlorpalladat oder Gold(III)chlorid ist.

6. Verfahren nach einem der vorstehenden Ansprüche, das bei einer Temperatur von 2°C bis 55°C ausgefürt wird.

7. Verfahren nach Anspruch 6, wobei die Temperatur 20°C bis 50°C beträgt.

8. Verfahren nach Anspruch 7, wobei die Temperatur die Umgebungstemperatur ist.

## Revendications

1. Procédé pour la préparation d'un premier métal à partir d'un sel de celui-ci par une réduction en présence d'un agent réducteur, **caractérisé en ce que** la réduction est effectuée dans une phase d'un système de cristaux liquides en présence d'un composé d'un deuxième métal, dans lequel le composé du deuxième métal est plus facilement réduit par l'agent réducteur que ne l'est le sel du premier métal, dans lequel le premier métal est l'étain, le cobalt ou le fer.

2. Procédé selon la revendication 1, dans lequel le sel du premier métal est le tétrafluoroborate d'étain (II), le stannate de potassium, l'acétate d'étain (II), le chlorure d'étain (IV), le bromure d'étain (II), le chlorure d'étain (II), le méthanesulfonate d'étain (II), le chlorure de cobalt (II), l'acétate de cobalt (II), le sulfate de cobalt (II), le chlorure de fer (II), le sulfate de fer (II), le tétrafluoroborate de fer (II) ou le sulfamate de fer (II).

3. Procédé selon la revendication 1 ou la revendication 2, dans lequel le premier métal est l'étain.

4. Procédé selon l'une quelconque des revendications précédentes, dans lequel le deuxième métal est le cuivre, le platine, le palladium, l'argent, l'or, le nickel ou le cobalt.

5. Procédé selon la revendication 4, dans lequel le composé du deuxième métal est le sulfate de tétramine-cuivre (II), le tétrafluoroborate de cuivre (II), l'acide hexachloroplatinique, le tétrachloropalladate d'ammonium ou le chlorure d'or (III).

6. Procédé selon l'une quelconque des revendications précédentes, effectué à une température de 2°C à 55°C.

7. Procédé selon la revendication 6, dans lequel la température est de 20°C à 50°C.

8. Procédé selon la revendication 7, dans lequel la température est la température ambiante.
